# FASCICULE DE BREVET EUROPEEN

(11) **EP 1 911 617 B1**
(45) Date de publication et mention de la délivrance du brevet: **02.12.2009**
(21) Numéro de dépôt: 07291230.6
(22) Date de dépôt: 09.10.2007
(51) Int. Cl.: B60H 1/34

(54) **Aérateur pour véhicule automobile**
Luftausströmer für Kraftfahrzeug
Air vent for a motor vehicle

(30) Priorité: 09.10.2006 FR 0654152
(43) Date de publication de la demande: 16.04.2008
(73) Titulaire: Peugeot Citroën Automobiles SA, 78140 Vélizy-Villacoublay (FR); Key Plastics International, 61130 Bellême (FR)
(72) Inventeur: Barre, Philippe, 94340 Joinville le Pont (FR); Pintat, Bruno, 92190 Meudon (FR); Avanzini, Philippe, 61130 Bellême (FR)
(74) Mandataire: Habasque, Etienne J. Jean-François

(56) Documents cités:
- WO-A-2006/077308
- DE-A1-102004 052 773
- DE-U- 6 811 796
- FR-A1- 2 792 256
- GB-A- 1 310 493
- GB-A- 1 396 993

## Description

La présente invention concerne un aérateur pour véhicule automobile, destiné à être disposé en sortie d'un circuit d'aération débouchant dans l'habitacle du véhicule, du type comprenant :
- un conduit d'air formé par un premier corps tubulaire d'entrée d'air et un deuxième corps tubulaire de sortie d'air reliés par une première articulation possédant un centre de rotation, de sorte que le deuxième corps est orientable par rapport au premier corps pour orienter un flux d'air sortant de l'aérateur,
- au moins un volet de fermeture de l'aérateur, monté mobile sur le premier corps, entre une position d'ouverture et une position de fermeture du conduit, et
- des moyens de commande des volets.
- les moyens de commande comprennent un organe de commande monté mobile sur le deuxième corps, et lié en mouvement au ou à chaque volet par l'intermédiaire d'une deuxième articulation possédant le même centre de rotation que la première articulation.

Un tel aérateur est divulgué par FR 2 792 256 A1.

Un but de la présente invention est de fournir un aérateur compact et de coût faible.

A cet effet, l'invention propose un aérateur du type précité, caractérisé en ce que l'organe de commande est une bague de manoeuvre montée rotative sur le deuxième corps, autour d'un axe central du deuxième corps.

Selon d'autres modes de réalisation, l'aérateur comprend une ou plusieurs des caractéristiques suivantes, prise(s) isolément ou selon toutes les combinaisons techniquement possibles :
- les moyens de commande comprennent un premier arbre monté rotatif sur le premier corps et un deuxième arbre monté rotatif sur le deuxième corps, les premier et deuxièmes arbres étant liés en rotation par l'intermédiaire de la deuxième articulation ;
- le premier arbre est monté rotatif à l'intérieur du premier corps autour d'un axe central du premier corps ;
- le deuxième arbre est monté rotatif sur le deuxième corps autour d'un axe radial par rapport à un axe central du deuxième corps ;
- la première articulation est un premier cardan, et la deuxième articulation est un deuxième cardan ;
- le deuxième cardan comprend un croisillon de cardan monté rotatif sur le deuxième corps, le croisillon possédant quatre branches, et un embout complémentaire porté par le premier arbre, l'embout possédant quatre encoches dans lesquelles sont engagées les branches ;
- le deuxième cardan comprend un anneau solidaire du croisillon et possédant au moins un secteur angulaire denté, en prise avec un pignon porté par le deuxième arbre ;
- l'organe de commande est lié en mouvement au deuxième arbre par l'intermédiaire d'un doigt du deuxième arbre reçu dans une encoche liée en mouvement à l'organe de commande ;
- l'aérateur comprend une pluralité d'ailettes montées mobiles sur le deuxième corps entre une pluralité de positions pour modifier l'écoulement du flux d'air en sortie de l'aérateur, et des deuxièmes moyens d'entraînement apte à transformer le déplacement de l'organe de commande par rapport au deuxième corps en un déplacement des ailettes ;
- le deuxième mécanisme d'entraînement comprend pour chaque ailette une came liée à l'organe de commande et un suiveur de came lié à l'ailette.

L'invention et ses avantages seront mieux compris à la lecture de la description qui va suivre, donnée uniquement à titre d'exemple, et faite en référant aux dessins annexés, sur lesquels :
- la figure 1 est une vue schématique en coupe longitudinale d'un aérateur conforme à l'invention ;
- les figures 2 à 4 sont des vue éclatées de côté et en perspective partielles de l'aérateur de la figure 1 ;
- la figure 5 est une vue de côté d'une cage des moyens de commandes de l'aérateur de la figure 1 ;
- les figures 6 à 8 sont des vues schématiques illustrant une partie des moyens de commande de l'aérateur de la figure 1 dans différentes positions, et
- les figures 9 à 11 sont des vues schématiques de face d'ailettes disposées en sortie de l'aérateur de la figure 1, dans différentes configurations.

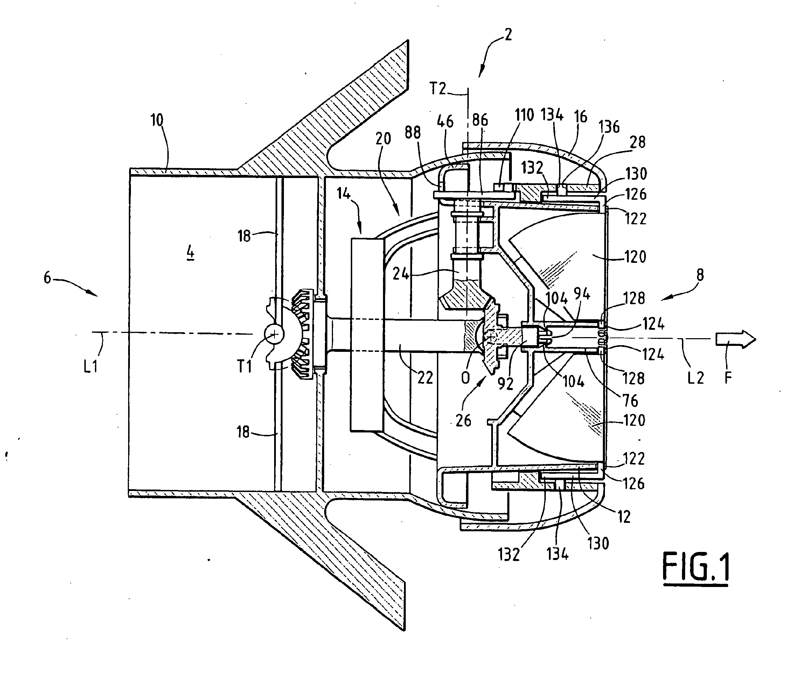

Tel que représenté sur la figure 1, l'aérateur 2 comprend un conduit d'air 4 s'étendant entre une entrée d'air 6 et une sortie d'air 8.

Dans la suite de la description, les termes « amont », « aval », « avant » et « arrière » s'étendent par référence au sens d'écoulement de l'air à travers l'aérateur 2, de l'entrée 6 vers la sortie 8, comme illustré par le flèche F sur la figure 1.

Le conduit 4 est formé par un premier corps 10 tubulaire d'entrée d'air s'étendant suivant un premier axe L1; et un deuxième corps 12 tubulaire de sortie d'air s'étendant suivant un deuxième axe L2 dans le prolongement du corps 10 en aval de celui-ci.

Les corps 10 et 12 sont reliés par un cardan 14 de centre de rotation O, permettant d'orienter le corps 12 par rapport au corps 10 de façon à orienter le flux d'air sortant de l'aérateur 2 dans différentes directions.

L'aérateur 2 comprend une bague 16 annulaire entourant le corps 12 et montée rotative sur le corps 12 autour de l'axe L2.

La bague 16 s'étend vers l'arrière à partir de l'extrémité avant du corps 12, et recouvre l'extrémité avant du corps 10 pour masquer la jonction entre les corps 10 et 12.

L'utilisateur peut saisir la bague 16 pour orienter le corps 12. La bague 16 forme ainsi un organe manoeuvre du corps 12.

L'aérateur 2 comprend des moyens de fermeture pour empêcher l'écoulement d'air à travers le conduit 4.

Ces moyens de fermeture comprennent deux volets 18 en forme de demi disque, montés rotatifs à l'intérieur du corps 10, en amont du corps 12, autour d'un axe T1 commun transversal à l'axe L1.

Les volets 18 sont mobiles entre une position d'ouverture dans laquelle les volets sont rabattus l'un vers l'autre pour dégager le conduit 4, et une position de fermeture (figure 1), dans laquelle les volets 18 s'étendent transversalement à l'axe L1, et forment ensemble un disque obturant le conduit 4.

L'aérateur 2 comprend des moyens de commande des volets 18 comprenant un mécanisme d'entraînement 20 liant en mouvement la bague 16 aux volets 18, de façon qu'une rotation de la bague 16 autour de l'axe L2 par rapport au corps 12 entraîne un déplacement des volets 18 entre leur position d'ouverture et leur position de fermeture.

La bague 16 forme ainsi un organe de commande des moyens de commande des volets 18.

Le mécanisme 20 comprend un premier arbre 22 monté rotatif sur le corps 10 autour de l'axe L1, un deuxième arbre 24 monté rotatif sur le corps 12 autour d'un axe T2 transversal par rapport à l'axe L2, et un deuxième cardan 26 liant en rotation les arbres 22 et 24.

Le mécanisme 20 comprend en outre une cage annulaire 28 entourant le corps 12, et solidaire de la bague 16.

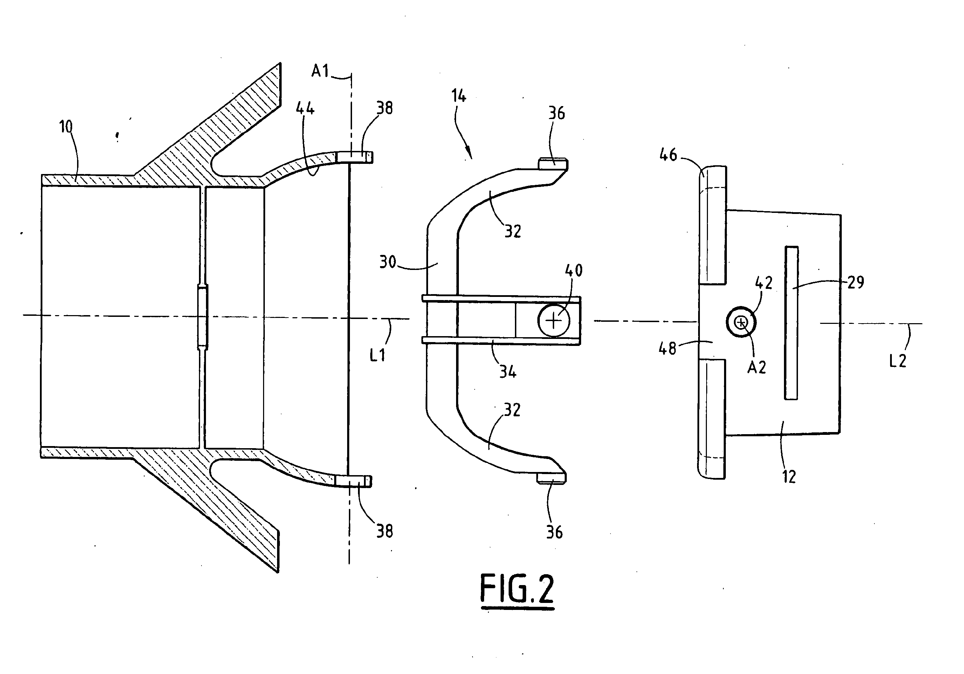

La cage 28 est liée au corps 12 par exemple par l'intermédiaire d'un ergot (non représenté) de la cage 28 coulissant dans une gorge 29 circonférentielle (figure 2) ménagée sur la surface extérieure du corps 12, s'étendant autour de l'axe L2 sur un angle limité pour limiter la plage angulaire de rotation entre la cage 28 et le corps 12.

Tel que représenté sur la figure 2, où seuls les corps 10 et 12 et le cardan 14 sont représentés, le cardan 14 comprend un anneau 30 et quatre branches 32, 34 régulièrement réparties à 90° autour de l'anneau 30, les branches 32, 34 s'étendant radialement vers l'extérieur à partir de l'anneau 30 et axialement vers l'avant.

Deux branches 32 diamétralement opposées possèdent chacune à son extrémité libre un tourillon 36 engagé à rotation dans un orifice 38 ménagé dans le corps 10.

Les branches 32 permettent la rotation du cardan 14 par rapport au corps 10 autour d'un axe A1 perpendiculaire à l'axe L1, passant par les orifices 38.

Deux branches 34 diamétralement opposées (une seule des branches 34 étant visible) possèdent chacune à leur extrémité libre un orifice 40 recevant à rotation un tourillon 42 disposé sur la surface extérieure du corps 12.

Les branches 34 permettent la rotation du corps 12 par rapport au cardan 14 autour d'un axe A2 (perpendiculaire au plan de la figure 2) perpendiculaire à l'axe L2 et passant par les tourillons 42. L'axe A2 est perpendiculaire à l'axe A1. Après montage, les axes A1 et A2 se coupent au centre O de rotation du cardan 14. Les axes L1 et L2 se coupent également au centre O.

Ainsi, le cardan 14 permet la rotation du corps 12 par rapport au corps 10 autour des axes A1 et A2, et la modification de l'inclinaison entre l'axe L2 et l'axe L1 dans une plage angulaire déterminée, par exemple de +/- 20° autour de l'axe L1.

La modification de l'orientation du corps 12 par rapport au corps 10 modifie la direction principale d'écoulement du flux d'air sortant de l'aérateur 2, et permet par conséquent à l'utilisateur de diriger le flux d'air simplement en agissant sur la bague 16.

Pour assurer une étanchéité à l'air à la jonction entre les corps 10 et 12, le corps 10 possède à son extrémité avant une portion de surface sphérique 44 centrée sur le centre O du cardan 14 lorsque l'aérateur 2 est monté, et le corps 12 possède à son extrémité arrière une collerette radiale 46 venant en contact avec la portion de surface 44.

La collerette 46 possède des encoches 48 (une seule étant visible) réparties à 90° autour de l'axe L2 pour le passage des branches 32, 34.

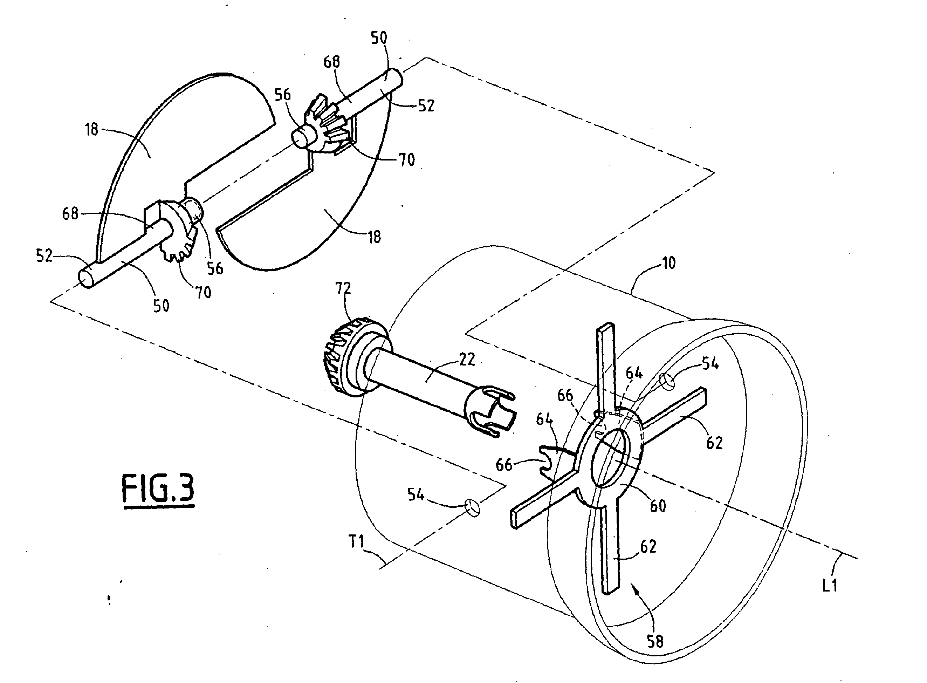

Tels que représentés sur la figure 3, chaque volet 18 possède un demi arbre 50 coopérant avec le demi arbre 50 de l'autre volet 18 pour articuler les volets 18 par rapport au corps 10.

Chaque demi arbre 50 possède une extrémité 52 prévue pour être reçue à rotation autour de l'axe T1 dans un orifice 54 du corps 10, et une extrémité 56 opposée prévue pour être emboîtée avec l'extrémité 56 de l'autre demi arbre 50

L'aérateur 2 comprend une structure 58 de support des volets 18 et de l'arbre 22 à l'intérieur du corps 10.

La structure 58 possède un anneau 60 d'axe L1 disposé à l'intérieur du corps 10 et relié à celui-ci par quatre bras 62, et deux flasques 64 diamétralement opposés s'étendant axialement vers l'arrière à partir de l'anneau 60.

Chaque flasque 64 est muni à son extrémité libre d'une encoche 66. Les encoches 66 sont alignées suivant l'axe T1 avec les orifices 54.

Chaque encoche 66 est prévue pour recevoir à rotation autour de l'axe T1 un tronçon intermédiaire 68 de l'un des demi arbres 50.

Chaque demi arbre 50 porte une portion de roue conique dentée 70 faisant partie du mécanisme 20.

L'arbre 22 est monté rotatif à l'intérieur de l'anneau 60, et possède à son extrémité arrière une roue conique dentée 72 en prise avec chacune des portions de roue dentée 68 lorsque les volets 18 et l'arbre 22 sont montés sur le corps 10.

En fonctionnement, la rotation de l'arbre 22 autour de l'axe L1 entraîne la rotation de chaque volet 18 autour de l'axe T1 entre la position d'ouverture et la position de fermeture.

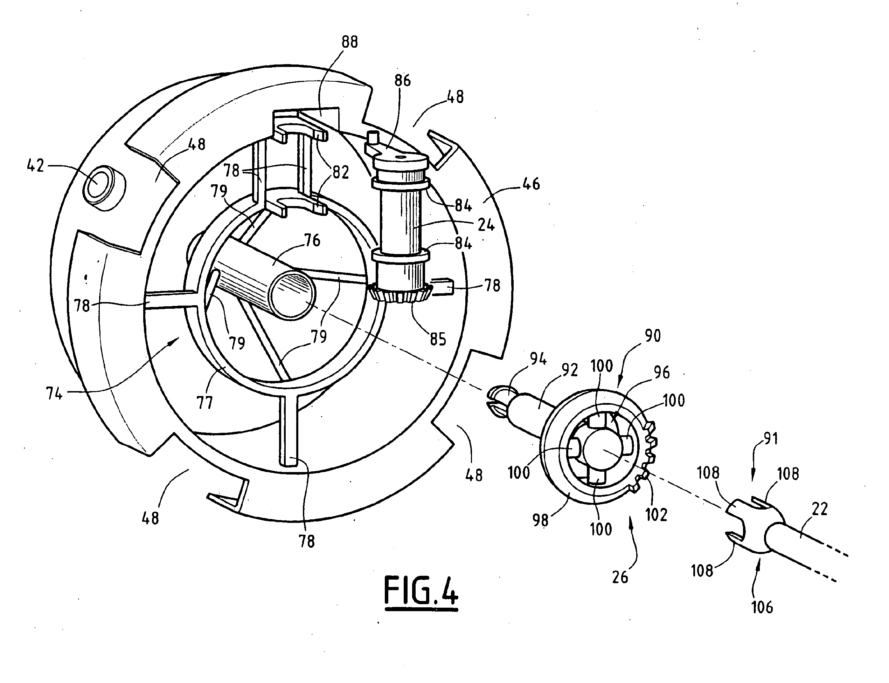

Tel que représenté sur la figure 4, l'aérateur 2 comprend une structure 74 supportant notamment l'arbre 24.

La structure 74 comprend un fût 76 cylindrique coaxial au corps 12 et disposé à l'intérieur du corps 12, un anneau 77 entourant le fût 76, des bras 78 radiaux reliant l'anneau 77 au corps 12, et des bras 79 radiaux reliant l'anneau 77 au fût 76.

La structure 74 comprend deux fourches 82 ouvertes vers l'arrière, disposés entre deux bras 78, et espacées suivant l'axe T2.

Chaque fourche 82 est adaptée pour recevoir l'arbre 24 à rotation autour de l'axe T2, et les fourches 82 permettent de monter l'arbre 24 à rotation sur la structure 74 autour de l'axe T2.

L'arbre 24 possède des épaulements 84 de blocage de l'arbre axialement par rapport aux fourches 82 suivant l'axe T2.

L'arbre 24 possède à une extrémité une portion de roue dentée conique 85, et à l'extrémité opposée un doigt 86 faisant saillie radialement vers l'avant.

La collerette 46 possède une ouverture 88 permettant le passage du doigt 86 lorsque l'arbre 24 est monté sur les fourches 82.

Le cardan 26 possède une première partie d'articulation 90 et une deuxième partie d'articulation 91 adaptées pour être emboîtées l'une dans l'autre.

La première partie 90 comprend une tige 92 d'axe L2, des crochets 94, un croisillon 96 et un anneau 98 d'axe L2.

Les crochets 94 sont disposés à une extrémité avant de la tige 92. Le croisillon 96 est disposé à l'extrémité arrière de la tige 92, et comprend quatre branches 100 s'étendant radialement vers l'extérieur à partir de la tige 92.

L'anneau 98 entoure le croisillon 96 en reliant les branches 100. L'anneau 98 porte une portion de roue dentée conique 102.

La partie 90 est montée rotative sur le fût 76 autour de l'axe L2 en insérant l'extrémité avant de la tige 92 dans l'extrémité arrière du fût 76, jusqu'à ce que les crochets 94 viennent en prise par encliquetage avec des dents 104 (figure 1) associées ménagées sur la surface intérieure du fût 76, pour bloquer la tige 92 axialement par rapport au fût 76.

La deuxième partie 91 comprend un embout 106 fixé sur l'extrémité avant de l'arbre 22, et emboîtable avec le croisillon 96.

L'embout 106 possède quatre pattes 108 (seules trois étant visibles sur la figure 4) s'étendant vers l'avant, et définissant entre elles quatre encoches axiales (seules deux étant visibles sur la figure 4) ouvertes vers l'avant destinées à recevoir chacune une des branches 100.

Une fois l'embout 106 emboîté avec le croisillon 96, le croisillon 96 et l'arbre 22 sont liés en rotation autour de leurs axes respectifs L1 et L2, tout en permettant une rotation relative de l'arbre 22 par rapport au croisillon 96 autour des axes A1 et A2.

La roue dentée 85 de l'arbre 24 est en prise avec la portion de roue dentée 102 de l'anneau 98.

Ainsi, l'arbre 24 est lié en rotation à l'arbre 22 par le cardan 26.

Le cardan 26 possède le même centre O de rotation que le cardan 14.

Ainsi, toute modification de l'orientation de l'arbre 24 par rapport à l'arbre 22 due à une modification de l'orientation corps 12 par rapport au corps 10, est absorbée par le cardan 26.

Tel que représenté sur la figure 1, le doigt 86 fait saillie dans une encoche 110 ménagée sur un bord arrière de la cage 28.

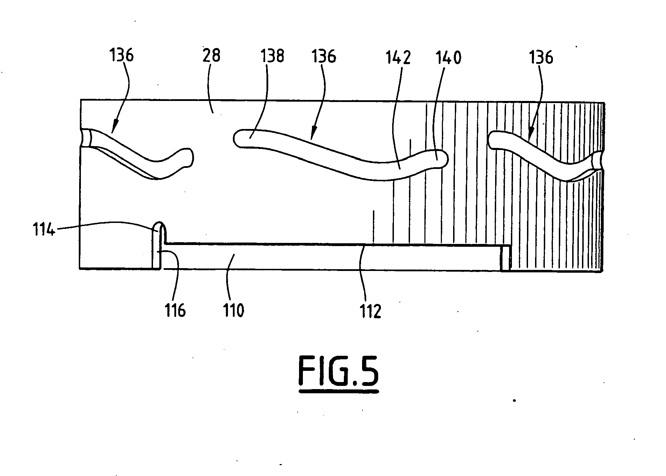

Tel que représentée sur la figure 5, qui est une vue de côté de la cage 28, l'encoche 110 s'étend circonférentiellement le long du bord arrière de la cage 28, et possède un fond 112 muni à une extrémité de l'encoche d'une échancrure 114.

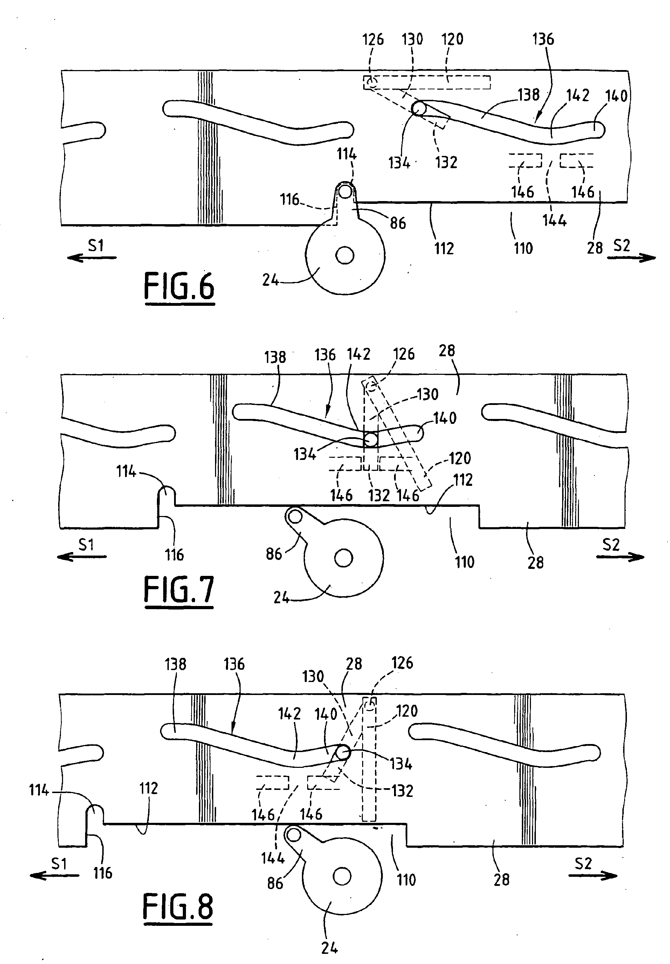

Telle que représentée sur les figures 6 à 8, qui sont des vues de côté de la cage 28 représentées développées, la rotation de la cage 28 autour de l'axe L2 commande la rotation de l'arbre 24 autour de l'axe T2 entre une première position (figure 6), dans laquelle le doigt 86 est reçu dans l'échancrure 114, et une deuxième position (figures 7 et 8) décalée angulairement autour de l'axe T2, par exemple de 72°, dans laquelle le doigt 86 est en appui sur le fond 112.

La rotation de l'arbre 24 entraîne la rotation l'anneau 98, qui entraîne à son tour la rotation l'arbre 22, qui entraîne la rotation les volets 18 autour de l'axe T1.

La première position du doigt 86 correspondant à la position de fermeture des volets 18, et la deuxième position du doigt 86 correspond à la position d'ouverture des volets 18.

Une rotation de la cage 28 dans le sens indiqué par la flèche S1 sur la figure 6, à partir de la première position de l'arbre 24, provoque la sortie du doigt 86 hors de l'échancrure 114 et la rotation de l'arbre 24 vers sa deuxième position. Une rotation supplémentaire de la cage 28 entraîne un glissement du doigt 86 le long du fond 112 sans rotation supplémentaire de l'arbre 24.

Une rotation dans le sens inverse illustré par une flèche S2 sur les figures 6 à 8 de la cage 28 laisse l'arbre 24 immobile jusqu'à ce que le doigt 86 butte contre la paroi latérale 116 de l'encoche 110 adjacente à l'échancrure 114, ce qui provoque le déplacement du doigt 86 au fond de l'échancrure 114 et la rotation de l'arbre 24 de la deuxième position vers la première position.

Telles que représentées sur la figure 1, l'aérateur 2 comprend un ensemble d'ailettes 120 disposées en travers du conduit 4 à l'extrémité avant du corps 12.

Les ailettes 120 sont mobiles par rapport au corps 12 entre une pluralité de positions, pour modifier l'écoulement du flux d'air en sortie de l'aérateur 2.

Chaque ailette 120 est montée mobile en rotation sur le corps 12 autour d'un axe radial.

A cet effet, pour chaque ailette 120, le corps 12 possède une encoche 122 ménagée sur son bord avant, et le fût 76 possède une encoche 124 ménagées sur son bord avant et alignée radialement avec l'encoche 122 correspondante.

Chaque ailette 120 comprend un tourillon 126 reçu à rotation dans l'encoche 122 et un tourillon 128 reçu à rotation dans l'encoche 124.

Les ailettes 120 sont maintenues par exemple à l'aide d'un rebord intérieur de la bague 16 refermant les encoches 122, et d'un capuchon (non représenté) fixé sur le fût 76 et refermant les encoches 124.

Les ailettes 120 sur régulièrement réparties autour de l'axe L2. Les ailettes 120 sont par exemple au nombre de six et réparties à 60° autour de l'axe L2.

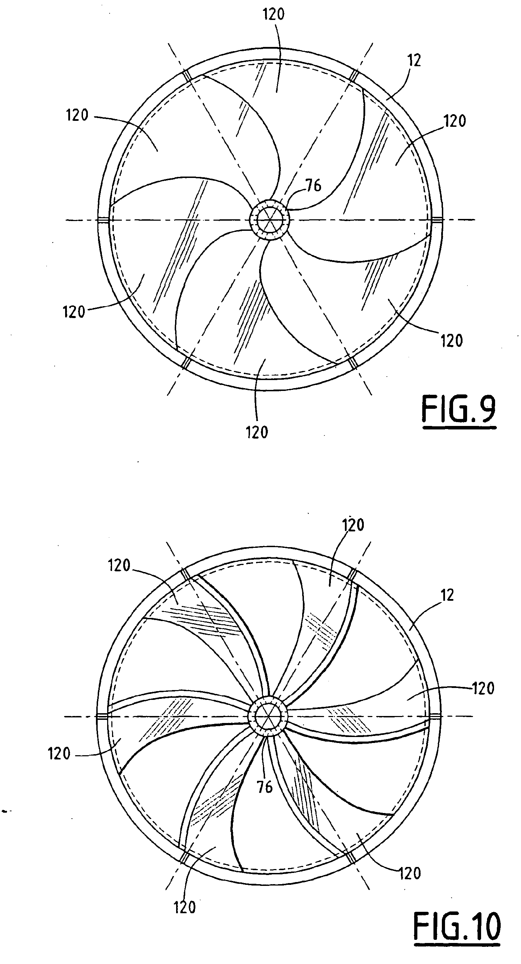

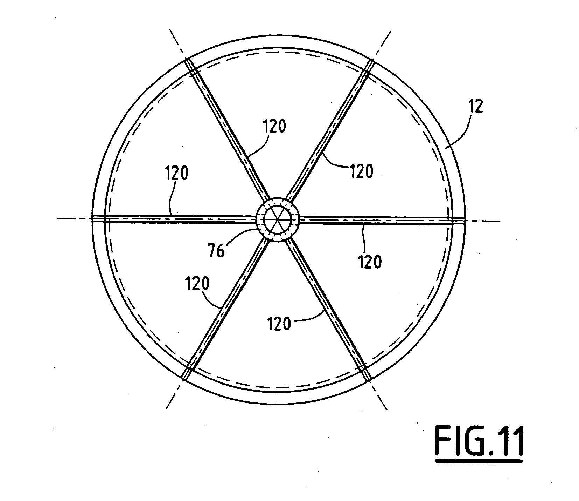

Telles que représentées sur les figures 9 à 11 représentant des vues de face de la sortie 8, les ailettes 120 sont mobiles entre une position de fermeture (figure 9) dans laquelle les ailettes 120 s'entendent perpendiculairement à l'axe L2 et forment un disque fermant la sortie 8 du conduit 4, et une position d'ouverture (figure 11) dans laquelle chaque ailette 120 s'étend axialement et dégage la sortie 8 du conduit 4.

En position d'ouverture (figure 11), les ailettes 120 permettent la formation d'un flux d'air axial concentré. Ce mode de diffusion est appelé mode de diffusion « spot ».

En position intermédiaire des ailettes 120 (figure 10), les ailettes dévient le flux d'air sortant de l'aérateur 2 pour former un flux d'air conique s'évasant à partir de la sortie 8. Ce mode de diffusion de l'air est appelé mode de diffusion « diffus ».

L'aérateur 2 comprend des moyens de commande des ailettes 120, utilisant comme organe de commande la bague 16, et possédant des moyens d'entraînement aptes à transformer un mouvement de rotation de la bague 16 autour du corps 12 en un déplacement des ailettes 120.

Telle que représentée sur la figure 1, chaque ailette 120 comprend un levier 130 prolongeant son tourillon 126, perpendiculairement à celui-ci, le levier 130 étant muni, à distance d'une extrémité libre 132 de celui-ci, d'un pion 134 coulissant dans une rainure 136 ménagée dans la cage 28.

Telle que représentée sur la figure 5, chaque rainure 136 s'étend circonférentiellement dans une direction, et possède, d'une de ses extrémités vers l'autre, un premier tronçon 138 s'étendant obliquement de l'avant vers l'arrière de la cage 28, et un deuxième tronçon 140, plus court que le premier tronçon 138, revenant à partir du point 142 de jonction entre les tronçons 138 et 140 obliquement vers l'avant de la cage 28.

Tel que représenté sur les figures 6 à 8, le levier 130 de chaque ailette 120 est incliné par rapport au plan de l'ailette 120.

En position de fermeture des ailettes 120 (figure 6), le pion 134 de chaque ailette 120 se trouve à l'extrémité fermée du tronçon 138 de la rainure 136 correspondante, opposée au tronçon 140.

Lors de la rotation de la cage 28 dans le sens indiqué par la flèche S1 sur les figures 6 à 8, le pion 134 coulisse dans la rainure 136 en direction du tronçon 140. Ce faisant, le pion 134 est sollicité en déplacement vers l'arrière.

Etant donné que l'ailette 120 est montée à rotation par l'intermédiaire des tourillons 126 et 128, ce déplacement du pion 134 se traduit par une rotation de l'ailette 120 vers sa position ouverte (figure 7).

Lorsque le pion 134 atteint le point 142, qui est le point de la rainure 136 le plus proche du bord arrière de la cage 28, délimitant la position la plus en arrière du pion 134, le levier 130 s'étend parallèlement à l'axe L2, et l'ailette 120 est en position partiellement ouverte.

Dans cette position, l'extrémité 132 du levier 130 vient s'encliqueter dans un cran 144 ménagé entre deux rampes 146 en saillie sur la surface intérieure de la cage 28.

En poursuivant la rotation de la cage 28, le pion 134 coulisse vers l'extrémité fermée du tronçon 140 en se rapprochant de l'avant de la cage 28. Ceci provoque une rotation supplémentaire de l'ailette 120, toujours dans le sens de l'ouverture, jusqu'à sa position d'ouverture complète (figure 8).

La présence de l'extrémité 132 coopérant avec le cran 144 améliore le guidage en rotation de l'ailette 120, en assurant que lors du passage du tronçon 138 au tronçon 140 par le point 42, l'ailette 120 pivote dans le sens correspondant à celui de la cage 28, sans blocage du levier 130.

La fermeture des ailettes 120 est effectuée par une rotation en sens inverse de la cage 28, à l'aide de la bague 16.

Ainsi, la bague 16 constitue également un organe de commande des ailettes 120.

Dans une première position extrême de la cage 28 (figure 6), les volets 18 et les ailettes 120 sont en position de fermeture.

Du fait de la coopération du doigt 86 avec l'encoche 110, une petite rotation de la bague 16 entraîne le déplacement des volets 18 de leur position de fermeture à leur position d'ouverture.

Pendant cette première phase de la rotation de la cage 28, l'inclinaison des tronçons 138 des rainures 136 est telle que les ailettes 120 pivotent peu ou pas du tout.

Du fait de la forme de l'encoche 110, une rotation supplémentaire de la cage 28 n'entraîne pas de rotation supplémentaire des volets 18. En revanche, elle entraîne un déplacement des ailettes 120 vers leur position d'ouverture.

Ainsi, le déplacement des volets 18 et des ailettes 120 est commandé à partir du même organe de commande, qui constitue en outre l'organe de manoeuvre du corps 12.

L'aérateur 2 est particulièrement compact du fait que les mécanismes de commande des volets 18 et des ailettes 120 sont compris essentiellement dans les enveloppes des corps 10 et 12.

A cet égard, l'arbre 22 disposé au centre du corps 10 permet un agencement particulièrement compact.

Ceci est rendu possible notamment du fait de la présence du deuxième cardan 26 possédant le même centre que le premier cardan 14, et qui permet transmettre le mouvement de la bague 16, située à l'extérieur du conduit 4, vers l'arbre 22, situé à l'intérieur du conduit 4.

Toutes les fonctionnalités de l'aérateur 2 sont commandées à partir de la bague 16, ce qui réduit le coût de fabrication en évitant d'avoir à prévoir des organes de commande spécifiques, déportés par rapport aux corps 10 et 12.

Les mécanismes de commande des volets 18 et des ailettes 120 possèdent en commun la cage 28, ce qui réduit le coût de fabrication.

Les mécanismes de commande permettent de la commande séquentielle des volets 18 et des ailettes 120, puisque la rotation de la bague 16 entraîne d'abord l'ouverture des volets 18, puis celle des ailettes 120. L'ouverture des ailettes 120 peut commencer avant l'ouverture complète des volets 18.

En variante, l'aérateur 2 est dépourvu d'ailettes mobiles, auquel cas la cage 28 n'a plus besoin de comporter les rainures 136 et d'une même longueur d'encoche 110. Incidemment, chaque ailette 120 est montée fixe dans le corps 12 en position ouverte sans qu'un levier 130 soit désormais nécessaire.

## Revendications

1. Aérateur pour véhicule automobile, destiné à être disposé en sortie d'un circuit d'aération débouchant dans l'habitacle du véhicule, du type comprenant :
- un conduit d'air (4) formé par un premier corps (10) tubulaire d'entrée d'air et un deuxième corps (12) tubulaire de sortie d'air reliés par une première articulation (14) possédant un centre de rotation (O), de sorte que le deuxième corps (12) est orientable par rapport au premier corps (10) pour orienter un flux d'air sortant de l'aérateur,
- au moins un volet (18) de fermeture de l'aérateur, monté mobile à l'intérieur du premier corps (10), entre une position d'ouverture et une position de fermeture du conduit (4), et
- des moyens de commande du ou de chaque volet (18),
dans lequel les moyens de commande comprennent un organe de commande (16) monté mobile sur le deuxième corps (12), et lié en mouvement au ou à chaque volet (18) par l'intermédiaire d'une deuxième articulation (26) possédant le même centre de rotation (O) que la première articulation (14),
**caractérisé en ce que** l'organe de commande (16) est une bague de manoeuvre montée rotative sur le deuxième corps (12), autour d'un axe central (L2) du deuxième corps (12).

2. Aérateur selon la revendication 1, **caractérisé en ce que** les moyens de commande comprennent un premier arbre (22) monté rotatif sur le premier corps (10) et un deuxième arbre (24) monté rotatif sur le deuxième corps (12), les premier et deuxièmes arbres (22, 24) étant liés en rotation par l'intermédiaire de la deuxième articulation (26).

3. Aérateur selon la revendication 2, **caractérisé en ce que** le premier arbre (22) est monté rotatif à l'intérieur du premier corps (10) autour d'un axe central (L1) du premier corps.

4. Aérateur selon la revendication 2 ou 3, **caractérisé en ce que** le deuxième arbre (24) est monté rotatif sur le deuxième corps (12) autour d'un axe radial (T2) par rapport à un axe central (L2) du deuxième corps (12).

5. Aérateur selon l'une quelconque des revendications 2 à 4, **caractérisé en ce que** la première articulation est un premier cardan (14), et la deuxième articulation est un deuxième cardan (26).

6. Aérateur selon la revendication 5, **caractérisé en ce que** le deuxième cardan (26) comprend un croisillon (96) de cardan monté rotatif sur le deuxième corps (12), le croisillon possédant quatre branches (100), et un embout complémentaire (106) porté par le premier arbre (22), l'embout possédant quatre encoches dans lesquelles sont engagées les branches.

7. Aérateur selon la revendication 6, **caractérisé en ce que** le deuxième cardan (26) comprend un anneau (98) solidaire du croisillon (96) et possédant au moins un secteur angulaire denté (102), en prise avec un pignon (85) porté par le deuxième arbre (24).

8. Aérateur selon l'une quelconque des revendications précédentes, **caractérisé en ce que** l'organe de commande (16) est lié en mouvement au deuxième arbre (24) par l'intermédiaire d'un doigt (86) du deuxième arbre (24) reçu dans une encoche (110) liée en mouvement à l'organe de commande (16).

9. Aérateur selon l'une quelconque des revendications précédentes, **caractérisé en ce qu'**il comprend une pluralité d'ailettes (120) montées mobiles sur le deuxième corps (12) entre une pluralité de positions pour modifier l'écoulement du flux d'air en sortie de l'aérateur, et des deuxièmes moyens d'entraînement apte à transformer le déplacement de l'organe de commande (16) par rapport au deuxième corps (12) en un déplacement des ailettes (120).

10. Aérateur selon la revendication 9, **caractérisé en ce que** le deuxième mécanisme d'entraînement comprend pour chaque ailette (120) une came (136) liée à l'organe de commande (16) et un suiveur de came (134) lié à l'ailette (120).

## Claims

1. Air vent for an automotive vehicle, provided for arrangement at the outlet of a ventilation circuit opening out into the passenger compartment of the vehicle, of a type comprising:
- an air duct (4) formed by a first tubular body (10) for the inlet of air and a second tubular body (12) for the outlet of air connected by a first articulation (14) having a centre of rotation (O), so that the second body (12) is orientable with respect to the first body (10) in order to orient an air stream leaving the air vent,
- at least one flap (18) for closure of the air vent, mounted inside the first body (10) so as to be movable between a position of opening and a position of closure of the duct (4), and
- means for control of the or each flap (18),
wherein the control means comprise a control member (16) movably mounted on the second body (12) and linked in terms of movement to the or each flap (18) by way of a second articulation (26) having the same centre of rotation (O) as the first articulation (14),
**characterised in that** the control member (16) is an actuating hoop mounted on the second body (12) so as to be rotatable about the central axis (L2) of the second body (12).

2. Air vent according to claim 1, **characterised in that** the control means comprise a first shaft (22) rotatably mounted on the first body (10) and a second shaft (24) rotatably mounted on the second body (12), the first and second shafts (22, 24) being linked in terms of rotation by way of the second articulation (26).

3. Air vent according to claim 2, **characterised in that** the first shaft (22) is mounted inside the first body (10) so as to be rotatable about the central axis (L1) of the first body.

4. Air vent according to claim 2 or 3, **characterised in that** the second shaft (24) is mounted on the second body (12) so as to be rotatable about a radial axis (T2) relative to the central axis (L2) of the second body (12).

5. Air vent according to any one of claims 2 to 4, **characterised in that** the first articulation is a first cardan joint (14) and the second articulation is a second cardan joint (26).

6. Air vent according to claim 5, **characterised in that** the second cardan joint (26) comprises a cardan cross-piece (96) rotatably mounted on the second body (12), the cross-piece having four branches (100), and a complementary mating part (106) carried by the first shaft (22), the mating part having four recesses in which the branches engage.

7. Air vent according to claim 6, **characterised in that** the second cardan joint (96) includes a ring (98) fixed on the cross-piece (96) and having at least one toothed angular sector (102) meshing with a pinion (85) carried by the second shaft (24).

8. Air vent according to any one of the preceding claims, **characterised in that** the control member (16) is linked in terms of movement to the second shaft (24) by way of a finger (86) of the second shaft (24) received in a recess (110) linked in terms of movement to the control member (16).

9. Air vent according to any one of the preceding claims, **characterised in that** it includes a plurality of blades (120) mounted on the second body (12) so as to be movable between a plurality of positions for modifying the outflow of the air stream leaving the air vent and second drive means capable of converting the displacement of the control member (16) relative to the second body (12) into a displacement of the blades (120).

10. Air vent according to claim 9, **characterised in that** the second drive mechanism comprises, for each blade (120), a cam (136) linked to the control member (16) and a cam follower (134) linked to the blade (120).

## Patentansprüche

1. Lüfter für ein Kraftfahrzeug, der zum Anordnen am Ausgang eines Belüftungskreislaufs vorgesehen ist, der in den Fahrgastraum des Fahrzeugs mündet, des Typs, der aufweist:
- einen Luftkanal (4), der von einem ersten röhrenförmigen Lufteingangskörper (10) und einem zweiten röhrenförmigen Luftausgangskörper (12) gebildet wird, die durch ein erstes Gelenk (14) miteinander verbunden sind, das ein erstes Drehzentrum (O) aufweist, so dass der zweite Körper (12) bezüglich des ersten Körpers (10) ausrichtbar ist, um einen aus dem Lüfter austretenden Luftstrom auszurichten,
- mindestens eine Klappe (18) zum Schließen des Lüfters, die zwischen einer Position zum Öffnen und einer Position zum Schließen des Kanals (4) bewegbar im Inneren des ersten Körpers (10) montiert ist, und
- Mittel zum Steuern der oder jeder Klappe (18),
wobei die Steuermittel eine Steuereinrichtung (16) aufweisen, die bewegbar an dem zweiten Körper (12) montiert ist und durch ein zweites Gelenk (26), das dasselbe Drehzentrum (O) wie das erste Gelenk (14) aufweist, bewegbar an die oder jede Klappe (18) angeschlossen ist,
**dadurch gekennzeichnet, dass** die Steuereinrichtung (16) ein Betätigungsring ist, der auf dem zweiten Körper (12) drehbar um eine zentrale Achse (L2) des zweiten Körpers (12) montiert ist.

2. Lüfter gemäß Anspruch 1, **dadurch gekennzeichnet, dass** die Steuermittel aufweisen: eine erste Welle (22), die drehbar an dem ersten Körper (10) montiert ist, und eine zweite Welle (24), die drehbar an dem zweiten Körper (12) montiert ist, wobei die erste und die zweite Welle (22, 24) durch das zweite Gelenk (26) drehbar aneinander angeschlossen sind.

3. Lüfter gemäß Anspruch 2, **dadurch gekennzeichnet, dass** die erste Welle (22) im Inneren des ersten Körpers (10) um eine zentrale Achse (L1) des ersten Körpers drehbar montiert ist.

4. Lüfter gemäß Anspruch 2 oder 3, **dadurch gekennzeichnet, dass** die zweite Welle (24) an dem zweiten Körper (12) um eine zu einer zentralen Achse (L2) des zweiten Körpers (12) radiale Achse (T2) drehbar montiert ist.

5. Lüfter gemäß einem der Ansprüche 2 bis 4, **dadurch gekennzeichnet, dass** das erste Gelenk ein erstes Kardangelenk (14) ist und das zweite Gelenk ein zweites Kardangelenk (26) ist.

6. Lüfter gemäß Anspruch 5, **dadurch gekennzeichnet, dass** das zweite Kardangelenk (26) aufweist: ein Kardankreuz (96), das drehbar an dem zweiten Körper (12) montiert ist, wobei das Kreuz vier Arme (100) aufweist, und ein komplementäres Anschlussstück (106), das von der ersten Welle (22) getragen wird, wobei das Anschlussstück vier Aussparungen aufweist, in die die Arme eingreifen.

7. Lüfter gemäß Anspruch 6, **dadurch gekennzeichnet, dass** das zweite Kardangelenk (26) einen Ring (98) aufweist, der einstückig mit dem Kreuz (96) ist und mindestens einen gezahnten winkligen Abschnitt (102) aufweist, der mit einem Ritzel (85) in Eingriff ist, das von der zweiten Welle (24) getragen wird.

8. Lüfter gemäß einem der vorhergehenden Ansprüche, **dadurch gekennzeichnet, dass** die Steuereinrichtung (16) durch einen Finger (86) der zweiten Welle (24), der in einer Aussparung (110) aufgenommen ist, die bewegbar mit der Steuereinrichtung (16) verbunden ist, bewegbar mit der zweiten Welle (24) verbunden ist.

9. Lüfter gemäß einem der vorhergehenden Ansprüche, **dadurch gekennzeichnet, dass** er aufweist: eine Mehrzahl von Flügeln (120), die an dem zweiten Körper (12) zwischen einer Mehrzahl von Positionen zum Modifizieren des Strömens des Luftstroms am Ausgang des Lüfters bewegbar angeordnet sind, und zweite Antriebsmittel, die zum Umwandeln der Bewegung der Steuereinrichtung (16) relativ zu dem zweiten Körper (12) in eine Bewegung der Flügel (120) geeignet sind.

10. Lüfter gemäß Anspruch 9, **dadurch gekennzeichnet, dass** der zweite Antriebsmechanismus für jeden Flügel (120) eine an die Steuereinrichtung (16) angeschlossene Steuerkurve (136) und einen an den Flügel (120) angeschlossenen Mitnehmer (134) aufweist.
